# EUROPÄISCHE PATENTSCHRIFT

(11) **EP 0 728 659 B1**
(45) Veröffentlichungstag und Bekanntmachung des Hinweises auf die Patenterteilung: **12.05.1999**
(21) Anmeldenummer: 96200438.8
(22) Anmeldetag: 20.02.1996
(51) Int. Cl.: B62H 5/14, B62H 5/00

(54) **Fahrradschloss des Ringbügeltyps**
Ring type bicycle lock
Serrure de bicyclette du type bague de verrouillage

(30) Priorität: 23.02.1995 NL 9500355
(43) Veröffentlichungstag der Anmeldung: 28.08.1996
(73) Patentinhaber: STENMAN HOLLAND B.V., NL-3903 AV Veenendaal (NL)
(72) Erfinder: de Roos, Hendrik, 3901 WH Veenendaal (NL); Vellinga, Jacob, 3906 BE Veenendaal (NL)
(74) Vertreter: Timmers, Cornelis Herman Johannes

(56) Entgegenhaltungen:
- EP-A- 0 443 217
- DE-A- 2 604 732

## Beschreibung

Die Erfindung bezieht sich auf ein Fahrradschloß des Ringbügeltyps mit einer fest an dem Fahrradrahmen zu befestigenden Tragplatte, deren Konturen im wesentlichen denen des damit zu verbindenden Schloßkastens entsprechen, welcher Schloßkasten eine Kammer für das Schloßgehäuse und zwei von dessen beiden Seiten ausgehende, gebogene, Führungsschenkel für den Riegelbügel aufweist.

Ein derartiges Fahrradschloß ist an sich aus DE-A-2 836 530, insbesondere Fig. 8 und 9 und S. 12, Zeile 31 - S. 13, Zeile 30 bekannt.

In diesem bekannten Schloß ist der vollständige Schloßkasten mittels Befestigungselementen mit Rastwirkung an der Tragplatte befestigt, die bei dem montierten Schloßkasten frei zugänglich sind und leicht forciert, zum Beispiel durchgesägt, werden können. Wenn dies, bei geschlossenem Schloß, passiert ist und der Schloßkasten sich also vom Rahmen gelöst hat, kann das Schloß verdreht werden, woraufhin der Verschlußbügel für Sägen und Durchschleifen frei erreichbar ist. Auch das "Aufschälen" des Schloßkastens ist dann leicht möglich.

Der Erfindung liegt die Aufgabe zugrunde, ein gattungsgemäßes Fahrradschloß mit einer durchaus sprengsichereren Befestigung des Schlosses an dem Rahmen zu schaffen, das demzufolge schwieriger zu forcieren ist. Diese Aufgabe wird gemäß der Erfindung dadurch erreicht, daß von der Tragplatte eine im wesentlichen quer dazu stehende Haltelasche ausgeht, die bis unter das Schloßgehäuse durchläuft und über ein Befestigungselement mit dem gekuppelt ist.

Die Befestigungslasche, das Befestigungselement und die Unterseite des Schloßgehäuses sind bei montiertem Rad (und das montierte Rad ist bei geschlossenem Schloß nicht herausnehmbar) nahezu unerreichbar, so daß ein besonders wirkungsvoller Schutz gegen das Lösen des Schloßkastens erzielt wird.

Eine schnelle und sichere Befestigung wird vorzugsweise dadurch erzielt, daß in die Befestigungslasche eine Öffnung zur Aufnahme einer durch diese hindurchgehenden, in das Schloßgehäuse einzuschraubenden Befestigungsschraube eingeformt ist.

Eine noch höhere Sprengsicherheit wird vorzugsweise dadurch erzielt, daß von den inneren Enden des jeweils gebogenen Schenkels der Tragplatte eine in Richtung auf den Schloßkasten abgewinkelte Endlasche ausgeht, in die eine Öffnung für das im geschlossenen Zustand des Schlosses Aufnehmen des Riegelbügels eingeformt ist.

In geschlossenem Zustand des Schlosses läuft der Riegelbügel durch diese Öffnungen hindurch, womit eine zusätzliche Kupplung zwischen Schloßkasten und Tragplatte realisiert ist.

Bevorzugte Ausführungen des erfindugsgemäßen Schlosses sind in den Ansprüchen 4 - 8 beschrieben.

Die Maßnahme gemäß Anspruch 4 hat den Vorteil, daß die, eventuell aus gehärtetem Material hergestellte, Schloßplatte einen zusätzlichen Forcierschutz bietet.

Die Maßnahme gemäß Anspruch 5 hat den Vorteil, daß der Aufbau klapperfrei ist und die Lackschicht des Rahmens nicht beschädigt wird.

Die Maßnahme gemäß Anspruch 6 erleichtert die Montage des Schlosses, während die Maßnahme gemäß Anspruch 7 es ermöglicht, mit Hilfe eines mit einem Ende an dem Fahrrad verankerten Schloßkabels oder einer Schloßkette einen zusätzlichen Schutz zu schaffen. Diese Verankerung ist vorzugsweise auf die in den Ansprüchen 8 und 9 beschriebene Weise ausgeführt.

Zum Schluß wird das im Obenstehenden genannte Befestigungselement vorzugsweise zum Festsetzen eines Schmutzfängers an dem Fahrrad verwendet werden.

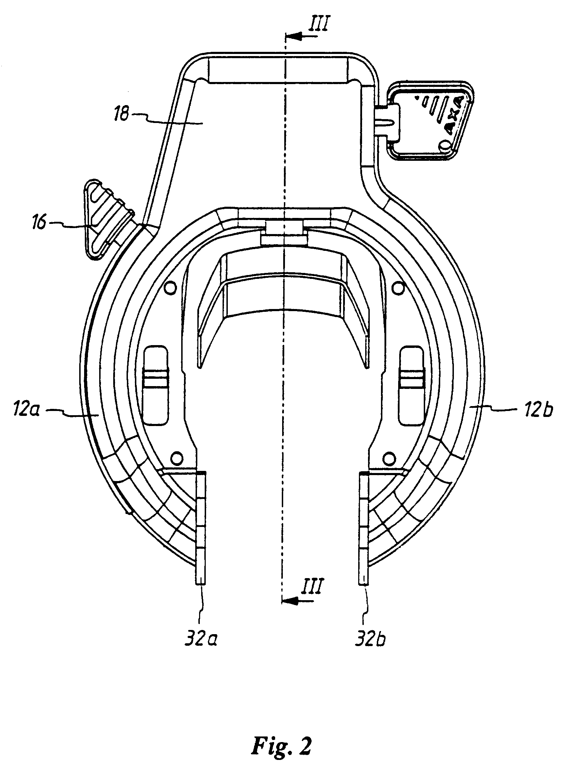

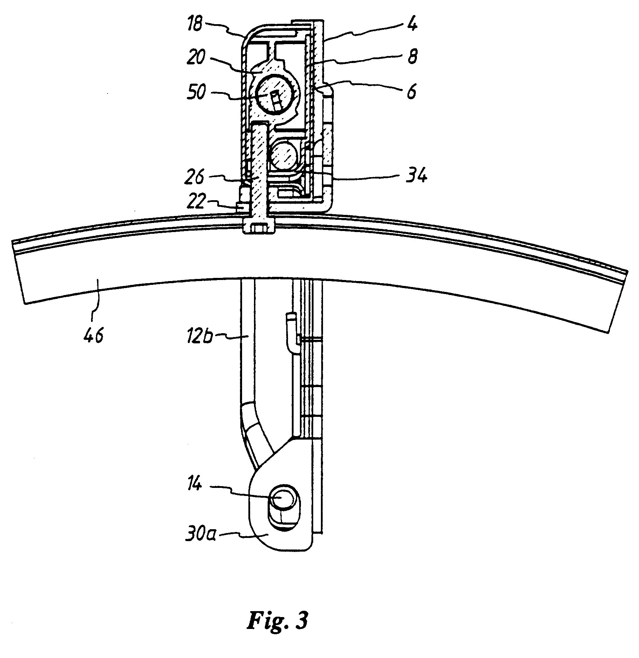

Die Erfindung wird anhand der Figuren 1, 2 und 3 erläutert.
- Fig. 1: zeigt eine Explosionsdarstellung des erfindungsgemäßen Schlosses;
- Fig. 2: zeigt eine Vorderansicht des Schlosses; und
- Fig. 3: zeigt einen Querschnitt entlang der Linie III - III in Fig. 2.

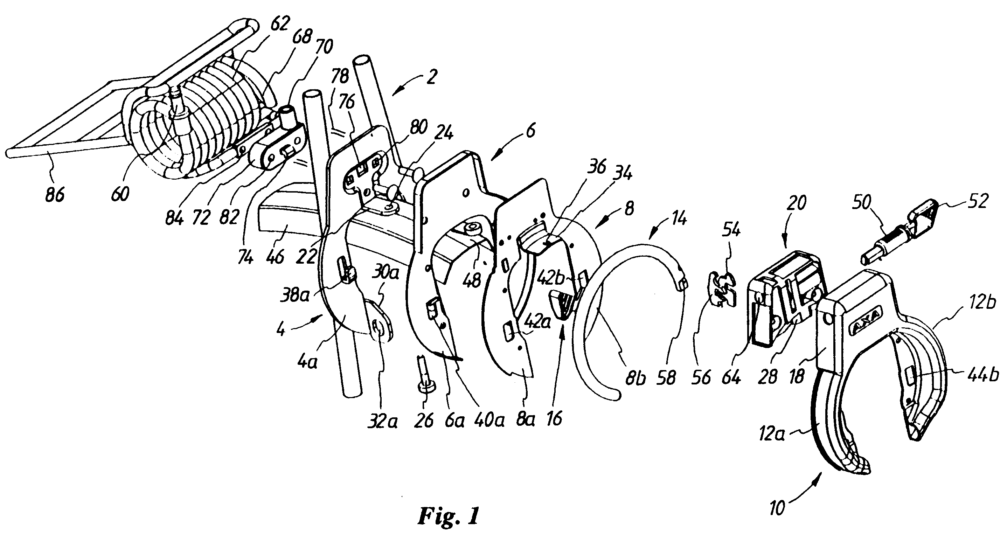

Die Figuren zeigen die Hintergabel 2 eines, weiter nicht dargestellten, Fahrrads, an dem unlösbar, zum Beispiel durch Schweißen oder Hartlöten, die Tragplatte 4 festgesetzt ist. An dieser Tragplatte 4 ruhen - in dieser Reihenfolge - die aus Kunststoff hergestellte Zwischenplatte 6, die eventuell aus gehärtetem Stahl hergestellte Schloßplatte 8 und der Schloßkasten 10. Wie insbesondere Fig. 1 zeigt, weisen Tragplatte 4, Zwischenplatte 6, Schloßplatte 8 und Schloßkasten 10 konforme Konturen auf. Dieser Schloßkasten 10 hat die üblichen Führungsschenkel 12a, 12b für den Riegelbügel 14 mit Bedienungsknopf 16, der in dem von den Schenkeln 12a, 12b umschlossenen Raum angeordnet ist; die Kammer 18 des Schloßkastens 10 nimmt in üblicher Weise das Schloßgehäuse 20 auf.

Erfindungsgemäß geht von der Tragplatte 4 eine in Richtung auf den Schloßkasten 10 gerichtete Befestigungslasche 22 aus, mit darin eine Öffnung 24 zum Aufnehmen der Befestigungsschraube 26. Die Lasche 22 reicht bei montiertem Schloß bis unter das Schloßgehäuse 20 und ist durch die Schraube 22 hindurch in eine geeignete, in das Gehäuse eingeformte Bohrung 28 eingeschraubt. Damit sind die Teile unlösbar voneinander befestigt: Der Riegelbügel 14 ruht in den nach hinten, nach vorne und seitwärts abgeschlossenen Aufnahmeöffnungen in den Schenkeln 12a, 12b und in dem Schloßkasten 10, während der Riegelbügel 14 ebenfalls, wie an sich üblich, in einem Aufnahmeraum im Schloßgehäuse angeordnet ist.

Ein zusätzlicher Schutz wird durch die zwei folgenden Maßnahmen erzielt:

Jeder Schenkel der Tragplatte 4 hat an dem inneren Endrand eine in Richtung auf den Schloßkasten abgewinkelte Endlasche, angedeutet mit 30a in Fig. 1 für den Schenkel 4a. In jede Endlasche 30a ist eine Öffnung eingeformt, angedeutet mit 32a für die Endlasche 30a und derart dimensioniert, daß der Riegelbügel im geschlossenen Zustand des Schlosses dadurchgeht: Es ist klar, daß damit ein zusätzlicher Schutz erzielt ist.

Als zweite Maßnahme geht von der Schloßplatte 8 eine in Richtung auf den Schloßkasten abgewinkelte Abschirmplatte 34 aus, die bis unter das Schloßgehäuse 20 durchläuft und mit einer Öffnung 36 für die Schraube 26 versehen ist. Auch hiermit wird ein zusätzlicher Schutz gegen Forcierung des Schlosses erzielt.

Von jeweils einem der Schenkel der Tragplatte 4 ragt eine hakenförmige Prägung heraus, in Fig. 1 mit 38a für den Schenkel 4a angedeutet. Diese Prägungen gehen durch geeignete Öffnungen in den Schenkeln der Zwischenplatte 6 hindurch (mit 40a für den Schenkel 6a angedeutet; mit 42a, 42b für die Schenkel 8a, 8b der Schloßplatte 8 und mit 44b für den Schenkel 12b angedeutet. Mit Hilfe dieser hakenförmigen Prägungen können die Teile 6, 8 und 10 vorübergehend an der Tragplatte 4 gehalten werden, bis die vollständige Montage des Schlosses vollendet ist.

Die Befestigungslasche 22 mit Öffnung 4 kann, in Verbindung mit der Schraube 26, zum Festsetzen des Schmutzfängers 46 verwendet werden, der dazu mit einer geeigneten Befestigungsöffnung 48 versehen ist.

In der dargestellten Ausführungsform wirkt der Schloßzylinder 50, betätigt von der Schlüssel 52, mit zwei Zuhaltungen, jeweils mit 54 und 56 angedeutet, zusammen. Die Zuhaltung 54 wirkt in der bekannten Weise mit dem Ende 58 des Riegelbügels 14 zusammen, wahrend die Zuhaltung 56 dazu vorgesehen ist, mit dem Ende 60 eines Schloßkabels 62 zusammenzuwirken, dessen Ende in die Öffnung 64 des Schloßgehäuses 20, das der Einstecköffnung für den Schloßschüssel gegenüberliegt, eingesteckt wird. Das andere Ende 68 des Kabels 62 wird unlösbar festgesetzt in einem röhrenförmigen Aufnahmeelement 70, das angeformt ist an einem Block 72, der versehen ist mit dem Befestigungshaken 74, der durch die korrespondierende Öffnung 76 in der Tragplatte 4 hindurchgesteckt wird.

Der Block 72 wird mit den Schrauben 78, die durch Öffnungen 80 in der Tragplatte 4 hindurchgesteckt sind, und durch Öffnungen 82 im Block 72 und Öffnungen 84 in einer Querstange des Gepäckträgers 86 hindurchgehen, und an den Enden nicht dargestellte Muttern tragen, festgesetzt. Wenn das Schloß montiert ist, und die Köpfe der Schrauben 78 abgedeckt sind, kann der Block 72, dessen Befestigungshaken 74 an einer Tragplatte 4 gehalten wird, also nicht mehr davon gelöst werden.

Die Zwischenplatte 6 ist aus Kunststoff hergestellt und demnach geringfügig nachgiebig, wodurch ein Klappern des montierten Schlosses und Beschädigungen der Lackschicht vorgebeugt werden. Wie insbesondere Fig. 1 zeigt, sind die Ränder der Zwischenplatte 6 zum Schloßkasten 10 hin geringfügig abgewinkelt und umschließen damit die Schloßkammer 18 und die unteren Enden der Schenkel 12, 12b.

Es wird deutlich sein, daß der obenbeschriebene Aufbau weitgehend sprengsicher ist.

## Patentansprüche

1. Fahrradschloß des Ringbügeltyps mit einer fest an dem Fahrradrahmen (2) zu befestigenden Tragplatte (4), deren Konturen im wesentlichen denen des damit zu verbindenden Schloßkastens (10) entsprechen, welcher Schloßkasten (10) eine Kammer (18) für das Schloßgehäuse (20), und zwei von dessen beiden Seiten ausgehende, gebogene, Führungsschenkel (12a, 12b) für den Riegelbügel (14) aufweist, **dadurch gekennzeichnet,** daß von der Tragplatte (4) eine im wesentlichen quer dazu stehende Befestigungslasche (22) ausgeht, die bis unter das Schloßgehäuse (20) durchläuft und über ein Befestigungselement (26) damit gekuppelt ist.

2. Fahrradschloß nach Anspruch 1, **dadurch gekennzeichnet,** daß in die Befestigungslasche (22) eine Öffnung (24) zur Aufnahme einer dadurchgehenden, in das Schloßgehäuse einzuschraubenden Befestigungsschraube (26) eingeformt ist.

3. Fahrradschloß nach Ansprüchen 1 - 2, **dadurch gekennzeichnet,** daß von dem inneren Endrand des jeweils gebogenen Schenkels (40b) der Tragplatte (4) eine in Richtung auf den Schloßkasten abgewinkelte Endlasche (30a) ausgeht, in die eine Öffnung (32a) für das im geschlossenen Zustand des Schlosses Aufnehmen des Riegelbügels (14) eingeformt ist.

4. Fahrradschloß nach Ansprüchen 1 - 3, **dadurch gekennzeichnet,** daß zwischen der Tragplatte (4) und dem Schloßkasten (10) eine Schloßplatte (8) angeordnet ist, deren Konturen im wesentlichen denen des Schloßkastens (19) entsprechen, und von der eine quer dazu stehende Abschirmplatte (34) ausgeht, die bis unter das Schloßgehäuse durchläuft und mit einer Öffnung (36) für den Durchgang des Befestigungselements versehen ist.

5. Fahrradschloß nach Ansprüchen 1 - 4, **dadurch gekennzeichnet,** daß zwischen der Tragplatte (4) und der Schloßplatte (8) eine aus Kunststoff hergestellte Zwischenplatte (6) angeordnet ist, deren Konturen im wesentlichen denen der Schloßplatte (8) entsprechen und deren abgewinkelte Ränder bis an den Schloßkasten (10) durchlaufen.

6. Fahrradschloß nach Ansprüchen 1 - 5, **dadurch gekennzeichnet,** daß von den Schenkeln (4a) der Tragplatte (4) hakenförmige Prägungen (38a) ausgehen, die mit in die Zwischenplatte (6), die Schloßplatte (8) und den Schloßkasten (10) eingeformten Öffnungen zusammenwirken.

7. Fahrradschloß nach Ansprüchen 1 - 6, **dadurch gekennzeichnet,** daß der in dem Schloßgehäuse angeordnete Schloßzylinder (50) gekuppelt ist mit einer ersten Zuhaltung (54), die mit dem Riegelbügel (14) zusammenwirkt und einer zweiten Zuhaltung (56), die hinter einer der Einstecköffnung für den Schloßschlüssel gegenüberliegenden zweiten Öffnung (64) liegt, die dazu vorgesehen ist, ein Ende (6) eines Schloßkabels oder einer Schloßkette (62) aufzunehmen.

8. Fahrradschloß nach Anspruch 7, **dadurch gekennzeichnet,** daß das andere Ende (68) des Schloßkabels oder der Schloßkette (62) festgesetzt ist an einem Montageblock (72) mit zumindestens einer Befestigungsöffnung (84) und einem Befestigungshaken (74), der durch eine korrespondierende Öffnung (76) in der Tragplatte (4) geführt ist und dahinter festgehakt ist, und an der Tragplatte (4) mittels zumindestens einer Sicherheitsschraube (78) befestigt ist, die durch eine Öffnung (80) in der Tragplatte (4) und durch die Öffnung (84) in dem Montageblock hindurchgesteckt ist.

9. Fahrradschloß nach Anspruch 8, **dadurch gekennzeichnet,** daß die Befestigungsschraube (78) zugleich durch eine Öffnung (84) in einer Querstange des Gepäckträgers (86) geführt ist.

10. Fahrradschloß nach Ansprüchen 1 - 9, **dadurch gekennzeichnet,** daß die Befestigungslasche (22) zugleich zur Befestigung eines Schmutzfängers (46) dient.

## Claims

1. A bicycle lock of the shackle type comprising a mounting plate (4) for firmly fastening to the bicycle frame (2), the contours of the plate substantially corresponding to the contours of the lock case (10) for connecting thereto, the lock case (10) having a chamber (18) for the lock housing (20) and two bent guide arms (12a, 12b) extending on the two sides of the lock housing (20) for the locking shackle (14), characterised in that a fastening lug (22) extends substantially transversely from the mounting plate (4) up to and under the lock housing (20) and is coupled therewith by a fastening element (26).

2. A bicycle lock according to claim 1, characterised in that the fastening lug (22) is formed with an opening (24) for receiving a fastening screw (26) which extends through the opening and is for screwing into the lock housing.

3. A bicycle lock according to claims 1 and 2, characterised in that an end lug (30a) bent in the direction towards the lock case extends from the inner end edge of each bent arm (40b) of the mounting plate (4) and is formed with an opening (32) for receiving the shackle (14) when the lock is in the closed state.

4. A bicycle lock according to claims 1 - 3, characterised in that a lock plate (8) is disposed between the mounting plate (4) and the lock case (10), the contours of the plate substantially correspond to those of the lock case (19), and a guard plate (34) extends transversely to the lock plate, up to and under the lock housing, and is formed with an opening (36) through which the fastening element extends.

5. A bicycle lock according to claims 1 - 4, characterised in that a plastic intermediate plate (6) is disposed between the mounting plate (4) and the lock plate (8), the contours of the intermediate plate substantially corresponding to those of the lock plate (8) and the bent edges thereof extending up to the lock case (10).

6. A bicycle lock according to claims 1 - 5, characterised in that hooked embossed portions (38a) extend from the arms (4a) of the mounting plate (4) and co-operate with openings formed in the intermediate plate (6), the lock plate (8) and the lock case (10).

7. A bicycle lock according to claims 1 - 6, characterised in that the lock cylinder (50) disposed in the lock housing is coupled to a first latch (54) co-operating with the shackle (14) and a second latch (56) which is disposed behind a second opening (64) opposite the opening for inserting the lock key, the opening (64) being adapted to receive an end (6) of a lock cable or a lock chain (62).

8. A bicycle lock according to claim 7, characterised in that the other end (68) of the lock cable or the lock chain (62) is secured to a mounting block (72) having at least one fastening opening (84) and one fastening hook (74) passing through a corresponding opening (76) in the mounting plate (4) and is hooked and secured behind it and is fastened to the mounting plate (4) by at least one safety screw (78) which is inserted through an opening (80) in the mounting plate (4) and through the opening (84) in the mounting block.

9. A bicycle lock according to claim 8, characterised in that the fastening screw (78) also passes through an opening (84) in a transverse rod of the luggage carrier (86).

10. A bicycle lock according to claims 1 - 9, characterised in that the fastening lug (22) is also used for fastening a mudguard (46).

## Revendications

1. Serrure de bicyclette du type à étrier annulaire de verrouillage, présentant une plaque de support (4) à fixer rigidement au cadre de bicyclette (2) les contours de la plaque de support correspondant sensiblement à ceux du boîtier de serrure (10) qui est à relier à celle-ci, lequel boîtier de serrure (10) comporte une chambre (18) pour le corps de serrure (20), et deux branches de guidage (12a, 12b) arquées et partant de ses deux côtés pour l'étrier de verrouillage (14), caractérisé en ce qu'une patte de fixation (22) part de la plaque de support (4) et se trouve disposée de façon sensiblement transversale à la plaque de support, et en ce que cette patte de fixation s'étend jusque en dessous du boîtier de serrure (20) et est couplée à celui-ci par un élément de fixation (26).

2. Serrure de bicyclette selon la revendication 1, caractérisée en ce que dans la patte de fixation (22) est formée une ouverture (24) destinée à recevoir une vis de fixation (26) la traversant et à visser dans le boîtier de serrure.

3. Serrure de bicyclette selon les revendications 1 à 2, caractérisée en ce que, à partir du bord terminal intérieur de chaque branche arquée (40b) de la plaque de support (4), part une patte d'extrémité (30a) repliée dans la direction du boîtier de serrure, et dans laquelle est formée une ouverture (32a) destinée à recevoir, en position fermée de la serrure, l'étrier de verrouillage (14).

4. Serrure de bicyclette selon les revendications 1 à 3, caractérisée en ce que, entre la plaque de support (4) et le boîtier de serrure (10), est disposée une plaque de serrure (8), dont les contours correspondent sensiblement à ceux du boîtier de serrure (10), et d'où part, transversalement, une plaque de protection (34) qui s'étend jusqu'en dessous du boîtier de serrure et qui est munie d'une ouverture (36) pour le passage de l'élément de fixation.

5. Serrure de bicyclette selon les revendications 1 à 4, caractérisée en ce que, entre la plaque de' support (4) et la plaque de serrure (8), est disposée une plaque intermédiaire (6) en matière plastique, dont les contours correspondent sensiblement à ceux de la plaque de serrure (8) et dont les bords repliés s'étendent jusqu'au boîtier de serrure (10).

6. Serrure de bicyclette selon les revendications 1 à 5, caractérisée en ce que, des branches (4a) de la plaque de support (4) partent des découpes (38a) pliées en forme de crochet, et qui coopèrent avec des ouvertures ménagées dans la plaque intermédiaire (6), la plaque de serrure (8) et le boîtier de serrure (10).

7. Serrure de bicyclette selon les revendications 1 à 6, caractérisée en ce que le cylindre de serrure (50) disposé dans le boîtier de serrure, est couplé à une première gâchette (54) qui coopère avec l'étrier de verrouillage (14) et est couplé à une deuxième gâchette (56), qui est disposée derrière une deuxième ouverture (64) située en face de l'ouverture d'enfichage pour la clé de la serrure, cette deuxième ouverture étant prévue pour recevoir une extrémité (6) d'un câble de serrure ou d'une chaîne de serrure (62).

8. Serrure de bicyclette selon la revendication 7, caractérisée en ce que l'autre extrémité (68) du câble de serrure ou de la chaîne de serrure (62) est fixée fermement à un bloc de montage (72) comprenant au moins une ouverture de fixation (84), et un crochet de fixation (74) qui est guidé via une ouverture correspondante (76) dans la plaque de support (4) et qui est accroché fermement derrière celle-ci, et qui est fixé à la plaque de support (4) au moyen d'au moins une vis de sécurité (78), qui traverse la plaque de support (4) via une ouverture (80) et le bloc de montage via l'ouverture (84).

9. Serrure de bicyclette selon la revendication 8, caractérisée en ce que la vis de fixation (78) est également guidée via une ouverture (84) dans une barre transversale du porte-bagages (86).

10. Serrure de bicyclette selon les revendications 1 à 9, caractérisée en ce que la patte de fixation (22) sert également à la fixation d'un garde-boue.
